**Europäisches Patentamt**

(19) **European Patent Office**

**Office européen des brevets**

(11) **EP 0 561 001 B1**

(12) ## EUROPEAN PATENT SPECIFICATION

(45) Date of publication and mention
of the grant of the patent:
**22.01.1997 Bulletin 1997/04**

(51) Int. Cl.$^6$: **B01D 39/20**, B01D 39/14,
B01D 46/24, B01D 29/15

(21) Application number: **93906362.4**

(86) International application number:
**PCT/JP92/01323**

(22) Date of filing: **05.10.1992**

(87) International publication number:
**WO 93/06912 (15.04.1993 Gazette 1993/10)**

(54) **LAMINATED FILTER MEDIUM, METHOD OF MAKING SAID MEDIUM, AND FILTER USING SAID MEDIUM**

LAMINIERTES FILTERMEDIUM, METHODE ZUR HERSTELLUNG DES MEDIUMS UND FILTER, DER DAS MEDIUM VERWENDET

MILIEU FILTRANT STRATIFIE, PROCEDE DE PRODUCTION DE CE MILIEU ET FILTRE L'UTILISANT

(84) Designated Contracting States:
**DE FR GB**

(30) Priority: **07.10.1991 JP 289087/91**

(43) Date of publication of application:
**22.09.1993 Bulletin 1993/38**

(73) Proprietor: **NIPPON SEISEN CO., LTD.**
**Osaka-shi Osaka 541 (JP)**

(72) Inventor: **ISHIBE, Hideomi**
**Nippon Seisen Co., Ltd.**
**Hirakata-shi Osaka-fu 573 (JP)**

(74) Representative: **Türk, Gille, Hrabal, Leifert**
**Brucknerstrasse 20**
**40593 Düsseldorf (DE)**

(56) References cited:
**EP-A- 0 419 799**     **JP-A- 1 058 305**
**JP-A- 1 139 118**     **JP-B-63 066 566**
**JP-U- 1 095 229**     **US-A- 3 127 668**
**US-A- 4 186 100**

- **PATENT ABSTRACTS OF JAPAN vol. 13, no. 190 (C-593)8 May 1989 & JP-A-01 018 423 (PIYUARON JAPAN K.K.) 23 January 1989**
- **PATENT ABSTRACTS OF JAPAN vol. 5, no. 016 (C-041)30 January 1981 & JP-A-55 142 513 (NEGISHI SUTEMI) 7 November 1980**
- **CHEMIE. INGENIEUR. TECHNIK vol. 62, no. 4 , April 1990 , WEINHEIM DE pages 263 - 270 A.FISCHER & V.ARNOLD 'Pulvermetallurgische Bauelemente in der Verfahrenstechnik'**

## Description

[FIELD OF THE INVENTION]

The present invention relates to a laminated filter material, its fabricating method and a filter using a laminated filter which improves the filterability.

[BACKGROUND OF THE INVENTION]

Recently, an enhancement of filtering precision is desired, as filtration of liquids for removing foreign materials of about several microns in high polymers industrial field and filtration of gases for removing foreign materials of 0.1 µm or less, for example, in a process gas used in electronics field mainly for semiconductors are required. And also reduction of pressure loss in filtration is demanded.

Specifically those used to filter the process gas in manufacturing the semiconductors are required to be heat resistant for baking treatment, and corrosion resistant is also requested because a corrosive gas is often be used. Furthermore, in addition to such characteristics as toughness and flexibility, ease of mounting on the housing and easiness in after-processing are also desired. Here, the baking treatment is to remove harmful moisture adhered and existing in the system by heating an entire filtration system including a filter, for example, to about 200 to 400 deg. C.

Although high polymer materials, ceramics, metals and the like are used as filter material, those made of high polymer materials are limited in use owing to the reason of heat resistance and corrosion resistance. And those using ceramics are inferior in toughness and flexibility and easily cause cracks, cutting losses and the like. Moreover, it has such disadvantage that sealing must be performed in a part connected with the housing by using such a non-heat resistant material as highelasticity rubber, because it cannot be welded even when contained in the housing for use of filtration of a gas.

In addition, in a filter for precision filtration, whether for gas or for liquid, generation of impurities from the filter itself must be controlled to a minimum. Such impurities considerably deteriorate the filtering precision, being entrained in a liquid or gas filtered. As such impurities, in addition to water, hydrocarbon and the like which are generated from a high polymer filter itself when using a filter or packings of a high polymer material, it was found that such binders as organic binders mixed for conservation of the shape, when the filter is formed specifically by using powders and particles, are sources of the impurities.

Although such binders are mostly evaporated and removed by sintering and calculation of preliminary molding, since those in a deeper part of the product tend to be incompletely removed and remain therein, and the binders may exist as carbides by sintering and calcination, it is an essential requirement that such impurities are not included in a filter for precision filtration, particularly a filter used for filtering the process gas.

On the other hand, the so-called wet suction molding known for forming a particle layer on an entire surface of support member by immersing a porous support member in a suspension with fine particles mixed therein an reducing the inner pressure.

The wet suction molding is suggested, for example, in the Japanese Patent Publication No. 56-8643 (hereinafter called as "the former"), and Japanese patent Publication, No.63-66566 (herein-after called as "the latter").

The former discloses a method of forming a particle layer on a support layer by making a suspension of powders without using a binder, in addition to a method of using powders as they are without making a suspension.

It is required in the former, however, that a tubular body should be used as support member, and the support member should be rotated for adhesion by centrifugal force. Moreover, when using a suspension, pressurization is required from inside by using an elastic rubber and static compression die to increase adhering strength of a powder layer (see line 33, column 5 to line 39, column 6 of the Patent Publication).

However, with such method, it is difficult to obtain a high efficiency filter, as only a material of tubular shape and yet having a filtering layer in the inner surface thereof can be molded, the process is complicated, the filtering layer tends to be uneven in thickness, because it comes into contact with the suspension flow, and may cause re-separation of the laminated powders, and the porosity is reduced by pressure-contact between powders due to the effect of centrifugal force and compression.

In the latter, a support member substantially comprising a tubular body is disclosed, which is rendered to come into contact with a suspension flow after being impregnated with a liquid, and, besides the process being complicated, as the suggested method stands on a basis of using a suspension with an addition of organic binder (lines 37 to 39, column 5 of the Patent Publication), it is obvious to cause a residual binder.

The US-A-4,186,100 discloses an inertial type filter element comprising a porous wall composed of sintered metal particles in the size range of 0.5 to 44 µm and having a subsurface section not exceeding about 0.4 mm (0.015 inches) in thickness adjacent its upstream surface having a smaller pore size formed by finer metal particles in the size range of 0.02 to 0.5 µm which are deposited and sintered therein.

The invention was achieved by finding that a conservability of shape sufficient for sintering can be obtained by simple immersion and evacuation in a suspension without using a binder and without applying a centrifugal force or the like, and hence it is an object of the invention to provide a laminated filter material with high precision, low pressure loss and homogeneity and without a binder used therein, its fabricating method and a filter using the laminated filter material.

[DISCLOSURE OF THE INVENTION]

A first invention relates to a laminated filter material as defined in claim 1. The one surface of the support member is formed in asperities, and the particle layer is laminated so as to have a boundary surface with the support member aligned along the asperities by immersing the support member in a suspension of the particles without binder and sucking the suspension through the support member, and are fixed to the support member integrally by sintering.

A second invention relates to a method for fabricating a laminated filter material as defined in claim 11.

A third invention relates to a filter according to claim 8 comprising the above mentioned laminated filter material according to claim 1 and a housing supporting the laminated filter material. The housing has a metallic attachment part having a contacting surface with an end face of the laminated filter material, and the end face is fastened together by fusing the particle layer from the reverse side of the contacting surface of the attachment part.

The laminated filter material comprises a sintered porous metal, and therefore it is superior in strength, heat resistance, processability, attachability and the like, while the particle layer is maintained in a rigid bond, because it is aligned along the asperities of support member. Furthermore, as it is formed without application of centrifugal force or compression, but by immersing and evacuating the support member in the suspension without a binder, the filtering efficiency is improved because of an increase in porosity, reduction in pressure loss and homogenization, and a clean high precision filtering without generation of impurities is possible. In addition, because the support member is used, the strength can be maintained and the thickness of the particle layer can be reduced.

Since the filter is formed by the laminated filter material, it is superior in filtering characteristic, causes no breakage or crack, because it is welded to the housing from the reverse side surface of the attachment part of the housing, and attachable to a housing without using such high polymer material as a packing, thereby improving the heat resistance.

Furthermore, with regard to the fabricating method, because the particle are made into the suspension without using a binder, and the particle layer is formed by evacuation, it allows to fabricate laminated filter material having a superior homogeneity, high porosity and high filtering efficiency with various shapes in a simple process.

[BRIEF DESCRIPTION OF THE DRAWINGS)

An embodiment of the present invention will now be described by way of example, referring to the attached drawings, in which:

Fig. 1 is a sectional view showing an embodiment of the invention;
Fig. 2 is a magnified sectional view showing an example of a boundary surface;
Fig. 3 is a magnified micrograph showing an example of a support member and a particle layer;
Fig. 4 is a perspective view showing another example of a support member;
Fig. 5 is a sectional view showing the other example of a support member;
Fig. 6 is a sectional view showing still other example of a support member;
Fig, 7 is a sectional view showing an example of fabricating apparatus;
Fig. 8 is a diagram showing an example of relation between the particle size of powdery bodies of the support member and the thickness of the particle layer;
Fig. 9 is a sectional view showing an embodiment of a filter;
Fig. 10 is a magnified sectional view of weld metal part;
Fig. 11 is a diagram showing an example of flow rate characteristic;
Fig. 12 is a diagram showing examples of the thickness of the particle layer and the flow rate characteristics,

[DESCRIPTION OF THE PREFERRED EMBODIMENTS]

An embodiment for carrying out the present invention is described in the drawing as follows:

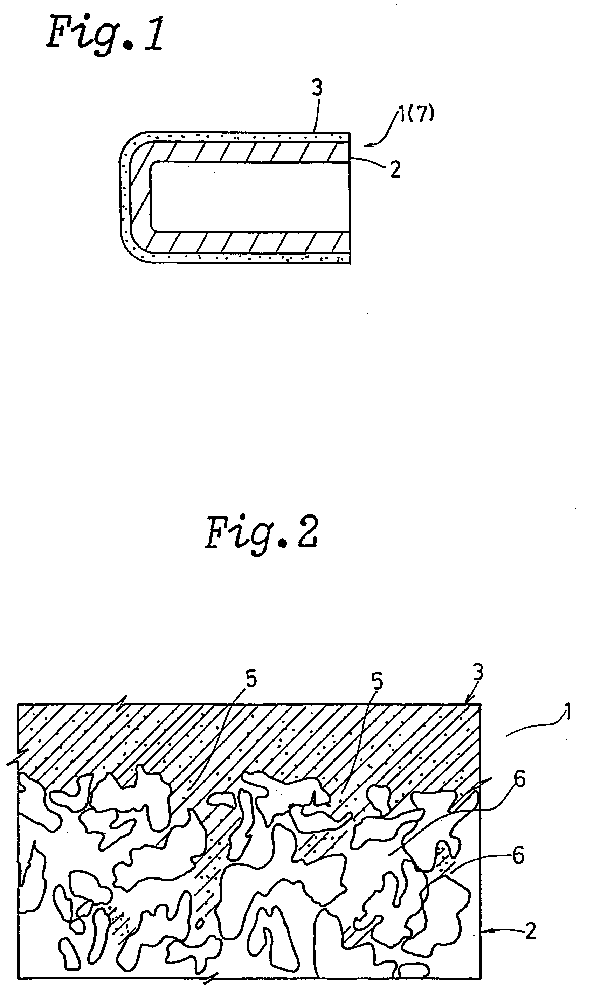

Fig.1 is an embodiment of the present invention illustrating a laminated filter material 1 having a cup-shape, in which the laminated filter material comprises a support member 2 and a particle layer 3 fixed on an outside surface of the support member 2.

It is necessary that the support member 2 has low pressure loss, sufficient strength, and pores formed uniformly and continuously from one surface to the other surface. As the foregoing support member 2, a sintered body made from metal powder is used in this embodiment.

The metal powder such as atomized powder with average diameter of 20 to 100 times (preferably 40 to 80 times) the average diameter of particles of the particle layer 3 is used, thereby forming the sufficiently large asperities 5 on the outside surface of the support member 2 by the outer surface shape of the metal powders, as shown in Fig. 2. Therefore, metal powder such as atomized powder of approximately #140/200 mesh to 200/250 mesh is adopted. The grain size of the powder of the support member 2 influences the smoothness of the outside surface of the laminated filter material 1, and the asperities are likely to be formed on the surface of the particle layer 3 when the grain size of the powder of the support member 2 is too rough. It is desirable that the outside surface of the laminated filter material 1 is smooth not only to provide good appearance but also to prevent foreign matter from adhering to the surface, and the powder of approximately 200/250 mesh is considered as comparatively desirable powder.

Further, stainless steel powder is used to obtain corrosion resistance. Especially, the amorphous powder increases percentage of pores and is able to control an increase in pressure loss and increase adhesive property of particles.

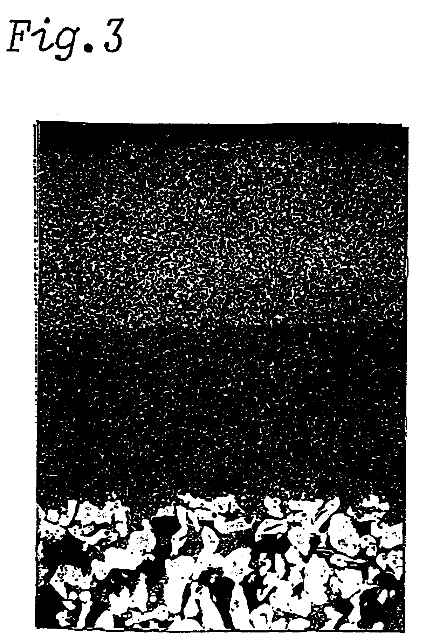

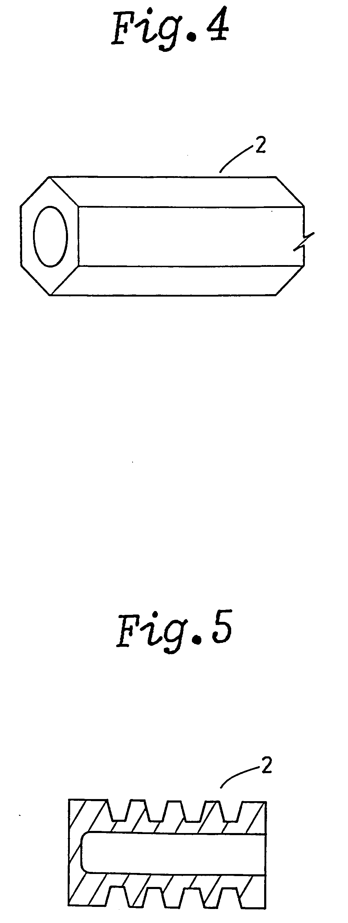

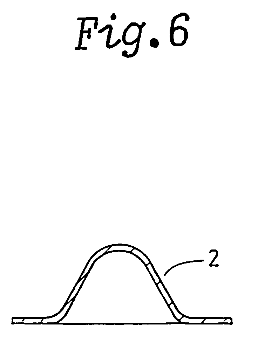

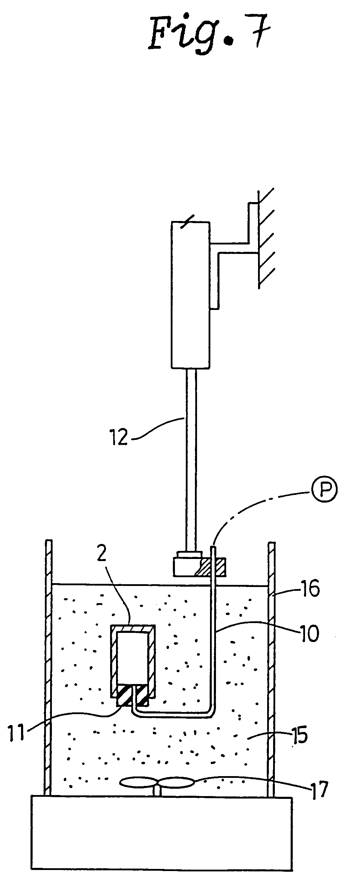

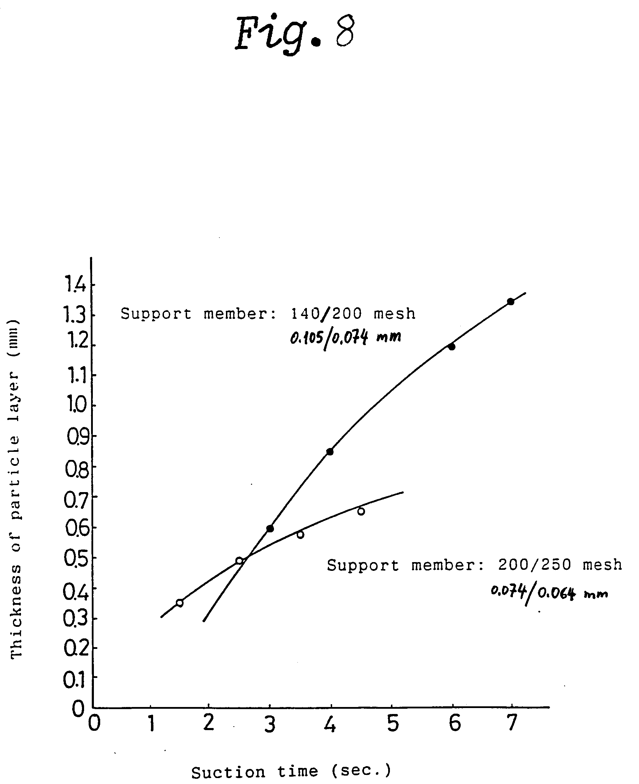

The average diameter of the pore of the support member 2 is set to be 20 to 100 μm, and the percentage of pores is set to be 40 to 50% so as to reduce pressure loss. It is possible that particles of the particle layer 3 enter into the support member 2 as shown in Fig.2 and Fig.3, but this entry of the particles does not pose a specific problem.

The support member 2 is formed by cold press under approximately $9,81 \cdot 10^7$ - $2,94 \cdot 10^8$ Pa [1 to 3 ton/cm$^2$] pressure without using a binder by sintering in a vacuum oven at approximately 1100° C for 60 minutes for example.

In addition to the stainless steel, metal powder such as titanium and Hastelloy (registered trademark of Haynes International) may be used to form the support member 2, and a sintered body of short fibers or long fibers of metal may be used instead of sintered body of metal powder. Further, powder metallurgy, fiber metallurgy as well as pores body such as foamed metal parts and wire rod mesh may be used.

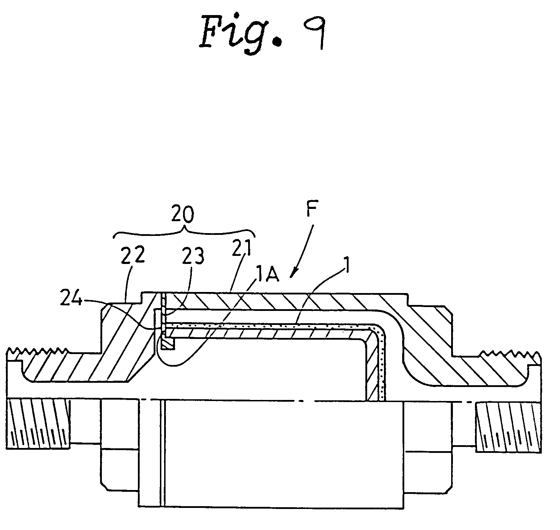

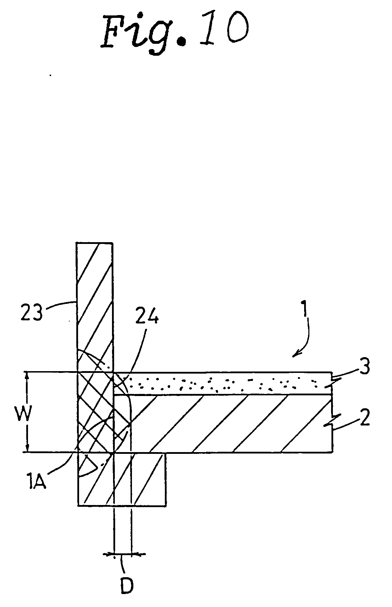

The support member 2 may be formed into a sheet-like body or cylindrical body, square tube-like body, or bellow-like body as shown in Fig.4 and Fig.5 in addition to the cup-type body, or may be formed into a conical body such as a sphere or a cone. Furthermore, the powder distribution may also be graded to mix two or more different powder or to form a multiple layer structure.

Fig.6 shows the hat-shapped support member 2 which is formed by molding the sintered sheet material of metal fibers randomly arranged, so that features such as strength and pore characteristic can be easily selected. When using the sheet material of stainless steel fibers of approximately 4 to 20 μm diameter, the support member 2 which has an average pore diameter of approximately 10 μm and a thickness of 1 to 3 mm is obtained.

When a mesh, which is a wire net, is used as the support member 2, the size of wire rod and the pore diameter are correlated, and a mesh of thin wire rod must be used in order to obtain fine pores. Because the use of such thin wire rod deteriorates the strength, a plurality of mesh (for example, 2 to 20 meshes or preferably 2 to 5 meshes) such as the one having a different wire diameter and mesh pitch and so forth, in addition to the same mesh, may be integrally formed into a laminated plate body, so that the laminated plate body may be formed into various shapes by machining such as bending and welding.

The particle layer 3 will be described.

The particles of the particle layer 3, comprise metal short fibers. It is preferable to use particles of the same kind of metal as the support member 2. In case stainless steel is used, SUS316L, SUS317L and so forth of good corrosion resistance are suitable. Or Inconel (registered trademark of The International Nickel CO.,), Monel metal (registered trademark of The International Nickel CO.,), Nickel or Hastelloy C type or X type (registered trademark of Haynes International) with high corrosion resistance may be adopted for filtering corrosive gas such as HCl and HF.

The metal short fibers are obtained by cutting mechanically the long fibers of stainless steel into short. Or the length of the crystal of long fibers of stainless steel, which are proposed by the applicant of the present invention by the Japanese examined patent publication No. 63-63645, is adjusted, and the long fibers in the grain boundary of the crystal thereof is cut into short fibers by a chemical method used to selectively corrode and cut the metal fibers in the grain boundary, so that the metal short fibers may be preferably used. The metal short fibers cut by above mentioned chemical method take a form of a column having the same diameter all over its length, free from burr at the end section, that is, free from a hook-like protrusion in a direction to intersect with the longitudinal axis, According to such arrangement, it becomes possible to reduce entanglement between the metal short fibers and to form homogeneous filtering layer.

The diameter of particles is smaller than the average pore diameter of the support member 2, and a fiber diameter of 0.5 to 15 μm or preferably 0.5 to 4 μm is used for metal short fibers. It should be noted that the metal short fibers of fine diameters from 0.5 to 2 μm was obtained by research and development made during recent years by the applicant of the present invention.

It is considered that the fibers with a diameter of 15 μm or greater make pores too large, and deteriorate the mutual adhesive property as well. Although fibers of finer diameter are preferable, it is difficult to manufacture fibers of diameter of 0.5 μm or less. By using metal short fibers with fine diameter of 0.5 μm to 15 μm, a filter with fine filtering pores can be obtained. Then, the diameter of pore and the distribution of pore can be made uniform, and metal binding property between the support member 2 as well as between particles can be improved.

As shown in Fig.2 and Fig.3 and described above, the boundary surface between the particle layer 3 and the support member 2 lies along the asperities 5 of the support member 2, and the particles enter into the pore 6 of the support member 2. As a result, the property of adhesion with the support member 2 can be increased and the strength of product after sintering can be improved.

The diameter of the metal short fiber 2 is a average diameter measured at each position and in each direction all over the entire length of each metal short fiber.

A short fiber of which diameter measured at each position and in each direction varies within a range of 30% of the average diameter is allowed to use. Also, plural sorts of the short fiber, wherein the average diameters of each sort of fiber are different to each other within a range of 20% of the average diameter, are allowed to use.

The aspect ratio of the metal short fiber is set at 2 to 15. The aspect ratio is a value obtained by dividing the length of short fibers by its diameter, that is, length/diameter. When the aspect ratio is over 15, sufficient dispersion of short fibers becomes difficult and some short fibers sintered in lumps are present, thereby impairing the uniformity of the fiber. Also, the forming of three-dimensional pores become difficult. When the aspect ratio is less than 2, the metal short fibers approach to powder and thus reduces the percentage of pore so as to increase the pressure loss. Therefore, preferably, the aspect ratio of the metal short fibers is in a range of 4 to 8.

With respect to the metal short fibers which are cut by the chemical method proposed, metal short fibers of long and short aspect ratio are mixed in the state of normal distribution. Therefore, the aspect ratio is defined as the average aspect ratio of the metal short fibers in this case. Variations in distribution can be reduced by setting the aspect ratio to 4 to 8 as described above.

Further, in addition to using metal short fibers only, it is also possible to adjust filtering pores by using a mixed powder of metal short fibers and metal powder.

As particles, powder in spherical shape or irregular shape which is manufactured by atomized method for example, can be used. In such a case, it is possible to mix powder of plurality of different particle diameter or shapes. Fine powder of atomized metal having as small particle diameter of less than 15 μm or preferably less than 6 μm as the metal short fibers may be used. By forming the powder into a sphere, pore distribution can be equalized but it is preferable to use powder of large apparent density in order to laminate the powder easily by suction method.

Further, in addition to using metal short fibers only, it is also possible to adjust filtering pores by using a mixed powder of metal short fibers and metal powder.

The particle layer 3 is a layer used for filtering, and it is preferable that pores thereof are made continuous with as small as well as uniform diameter as possible and as large percentage of pore as possible. To accomplish such as object, the percentage of pore is set in a range of 50% to 80%. It is possible to reduce the pressure loss and filtering performance by setting the percentage of pore of the particle layer 3 to 50% or greater as described above. The percentage of pore means the volume of void per unit volume of a sintered layer 3, it is calculated from the volume and weight of the particle layer 3 or calculated by image analysis.

Such the high percentage of pore is provided into the laminated layer of particles which is laminated, without using any binder, on the support member 2 by dipping the support member 2 into a suspension of the particles and by evacuating the support member 2. Because centrifugal force and static pressure are not used in laminating the particle layer 3, it is possible to increase the percentage of pore. Furthermore, it is possible to form the particle layer 3 along the asperities 5 of the support member 2.

The particle layer 3 is formed to have almost the same thickness. Preferably, the thickness of the particle layer 3 is set to be less than 1/2 or more preferably less than 1/4 and larger than 1/20 of the thickness of the laminated filter material 1, and for example, the thickness can be set to be 0.2 to 2.0 mm or preferably 0.3 to 0.5 mm. Even in case the thickness is set to be thicker as such, it is known that the particle layer 3 can demonstrate good filtering performance. The particle layer 3 can also be a plurality of layer which uses particles of different diameter.

The support member 2 and the particle layer 3 are made into one body by sintering.

Fig.7 shows an embodiment of the manufacturing method of the present invention illustrating the forming of the cup-like laminated filter material 1 as an example.

Firstly, the support member 2 is prepared by sintering the cup-like body formed by cold press.

By using powder whose diameter is large as compared with that of the particle layer 3, the asperities 5 is formed on the outside surface of the support member 2, while pores which continue from the outside surface to the inside surface are formed in the concave section of the asperities 5.

An opening of the cup-like support member 2 is sealed by a silicone rubber plug 11 through which a conduit 10 for suction passes, and the conduit 10 is installed to an elevating device 12. A vacuum pump P is connected to the conduit 10.

Then, the suspension 15 is prepared. In the liquid of the suspension 15 are suspended particles for forming the particle layer 3. Water or alcohol is used as the liquid. It is desirable to use water of high purity such as pure water as much as possible. Isopropyl alcohol and the like may be used as alcohol. Further, binder such as resin binder should not be mixed. The suspension 15 is stored in a container 16 which is deep enough to immerse the support member 2 completely.

The laminated filter material 1 which is clean and free from impurities is produced in a short process, because the heat treatment or high level washing process to remove binder are not necessary.

Concentration of the particle of the suspension 15 is set to be high concentration of over 200 g per liter. By this arrangement, it was found out that the time for evacuation can reduced and that the filter of defect-free and stable quality can be obtained. The concentration largely influences the pore distribution. When the concentration is excessively low, pin holes are formed in the particle layer 3, the percentage of pore after sintering becomes large, and the pore diameter moves toward coarse side.

Because the diameter of the pore in the support member 2 is made to be larger as compared with the size of particle, it is considered that if the concentration is low, particles pass through the support member 2 to form the pin holes in the particle layer 3 before the laminated layer is produced by bridge formation. Therefore, the concentration of particle is set to over 200 g per liter or preferably over 300 g per liter. The upper limit of the concentration is considered to be 1000 g per liter.

The container 16 of large capacity is used to maintaining the concentration of suspension, and the stirrer 17 is employed to stir the suspension. And the suspension of the same concentration is replenished when the level of the suspension is lowered due to consumption thereof.

The elevating device 12 is operated to immerse the support member 2 into the suspension 15. The elevating device 12 employs an air cylinder for example to allow rapid immersion. The immersion time is controlled precisely by a timer.

Prior to or after immersing the support member 2, the vacuum pump P is operated to reduce the pressure in the support member 2. In case the vacuum pump is operated before immersing, the suspension 15 is not sucked until the support member 2 is immersed perfectly into the suspension 15. Therefore, variations of the thickness of the particle layer 3 becomes relatively small.

Evacuation is performed at approximately 9810 to 88290 Pa (0.1 to 0.9 kg/cm$^2$) (10132 Pa to 90659 Pa) [(76 to 680 mmHg)] or preferably 10132 Pa to 30397 Pa (76 to 228 mmHg). By this, the particles dispersed in the suspension 15 are sucked sequentially onto the outside surface of the support member 2 so as to form the particle layer 3, wherein the particles enter into the inside of the pore 6 of the support member 2 and are accumulated along the asperities 5.

According to the arrangement of the above, the particle layer 3 will have pore percentage of approximately 50 to 80%. The suction pressure corresponds to the forming pressure of the particle layer 3, allowing the percentage of pore to change through adjustment of the suction pressure. However, because high pressure reduction is necessary for draining after forming, it is preferable that the evacuation is performed at a pressure up to approximately 10132 to 90659 Pa (76 to 228 mmHg) as described above. Further, processing time can be reduced by increasing the suction pressure.

The particle layer 3 is formed on one surface, that is, the outside surface of the support member 3 in the manner as described above. The concentration of the suspension does not change virtually, because the sucked liquid is discharged as it is. Therefore, it is possible to maintain the prescribed concentration simply by replenishing the suspension 15.

After suction and forming, the plug 11 is removed and the liquid is removed within the dryer. It is possible to maintain the shape of particle layer 3 even during the works such as taking out the support member 2 from the suspension 15, disconnecting the plug 11 and removal of the liquid.

Fig.8 shows a relation between the processing time and the thickness of the particle layer 3 in connection with the support members 2 sintered by the powder of 140/200 mesh and 200/250 mesh, wherein the particle layer 3 is formed from the particles comprising metal short fibers with the diameter of 2.5 µm and the aspect ratio of 6 under the conditions of 300 g per liter of concentration and 400 cc per minute of suction speed.

If the thickness of the particle layer 3 exceeds certain thickness, there is not much difference in particle collecting performance, but the thickness is considered to have influence on the pressure loss. When the concentration of the suspension 15 and the suction pressure are constant, it is considered that the thickness of the particle layer 3 can be adjusted by the suction time, but the pressure loss is high and the particle layer 3 becomes thin when the grain size of the powder of the support member 2 is fine. On the other hand, when the grain size of the support member 2 is fine, the bridge of the particles is formed quickly after the suction is started. Then, in the range of short suction time, thickness of the particle layer 3 is larger when the grain size of the support member 2 is fine. Therefore, it is known from the Fig.8 that the support member 2 of fine grain size is hard to be influenced by the difference of the suction time but is stable.

By processing the support member 2 in the manner as described above, a raw laminated body 7 which is composed of the support member 2 and the particle layer 3 laminated in almost uniform thickness on all over the circumference of the support member 2 is obtained.

To accomplish the lamination process, a plurality of suspension of different concentration is prepared and the particle layer 3 can be formed with a plurality of laminated structures by performing processes in order. Further, it is also possible to cause two or more different types of particles to be suspended in one suspension.

The raw laminated body 7 is sintered after drying. In the case of stainless steel, the sintering process thereof is performed in a vacuum furnace or inactive or hydrogen gas atmosphere furnace for example, and the raw laminated body 7 is held in the furnace for 5 minutes to 6 hours at the heating temperature of 900 to 1500° C for example depending on the quality of material. By raising the temperature of the furnace while avoiding a sudden temperature rise exceeding 20° C per minute or preferably 10° C per minute, it is possible to prevent cracks and the like in the relatively brittle particle layer 3 formed by laminating process.

By the sintering process of the above, the particles of the raw laminated body 7 are combined to each other and to the powder of the support member 2 so as to form into a solid integral body. The sintering conditions are determined according to the quality of material and properties of the particles.

The filter, which uses the laminated filter material, will be described. The filter F comprises, as shown in Fig.9, a cup-shaped laminated filter material 1 and a housing 20 containing the laminated filter material 1 therein so as to support and fix.

The housing 20 comprises a first, a second and a third split parts 21, 22 and 23. The first split part 21 has a cylindrical base with an inner hole for housing the laminated filter material 1, a first threaded connecter projecting at an end of the cylindrical base, and a first passage communicated between the inner hole and the end of the threaded connecter. The second split part 22 has a cap body to close the inner hole, a second threaded connecter projecting at an end of the cap body, and a second passage communicated between the inner hole and the end of the second threaded connecter. The third split part 23 has a ring-shaped metallic body 24 which is held between the first and second split parts 21, 22 and, in this embodiment, third split part 23 works as an attachment part fixing the laminated filter material 1.

The attachment part 23 has a contacting surface with an opening end-face 1A of the laminated filter material 1. The contacting surface and the opening end-face 1A are fixed to each other by plasma welding from the reverse side of the contacting surface of the attachment part. By this process, it is possible to prevent cracks which are likely to be involved in welding.

As shown in Fig.10, at least a part of the particle layer 3 is fused during welding. By this process, the positive sealing between the attachment part 23 and the laminated filter material 1 is made possible, and the unfiltered fluid is prevented from flowing out from the outlet. In the welded section, the fusion depth D can be made smaller than the fusion width W, thereby welding a wide width of the filter while controlling the reduction in the filtering area. Preferably, the fusion depth D is held to be approximately less than 5 mm.

According to the embodiment of the present invention, it is possible to weld the opening end-face 1A of the laminated filter material 1 directly to the second split part 22 without using the third split part 23. In this case, the second split part 22 works as a attachment part. Further, even when the laminated filter material 1 is a flat-shaped filter for example. it is possible to prevent cracks and the like by fixing the circumferential endface of the laminated filter material 1 by such method.

[EXAMPLE]

The support member shown in Fig. 1 is immersed for 2.0 second in a suspension of a metal short fiber of 316L stainless steel having a fiber diameter of 2.5 $\mu$m and average aspect ratio of 6 suspended in water at a concentration of 300 g/liter to obtain the raw laminated molding body having the particle layer of 0.4 mm in thickness. The support member was molded and sintered by using stainless steel powders of 200/250 in mesh. After drying the raw laminated body, the raw laminated body was sintered in a vacuum environment in a condition of 1000 degrees C x 30 minutes to form the laminated filter material. This is referred to as an embodiment. The embodiment has a beautiful surface and fine pores homogeneously formed in the particle layer.

Average pore diameter:   1.8 $\mu$m
Average porosity:         58%

Comparison examples 1, 2 and 3 available in the market for high precision filtering were purchased. Comparison examples 1 and 2 are ceramic filters, and comparison example 3 is of all stainless steel type wherein filter members are overlapped in a bellows-like fashion to form multiple layers.

The embodiment and comparison examples were measured for filtering characteristic.

[Test 1]

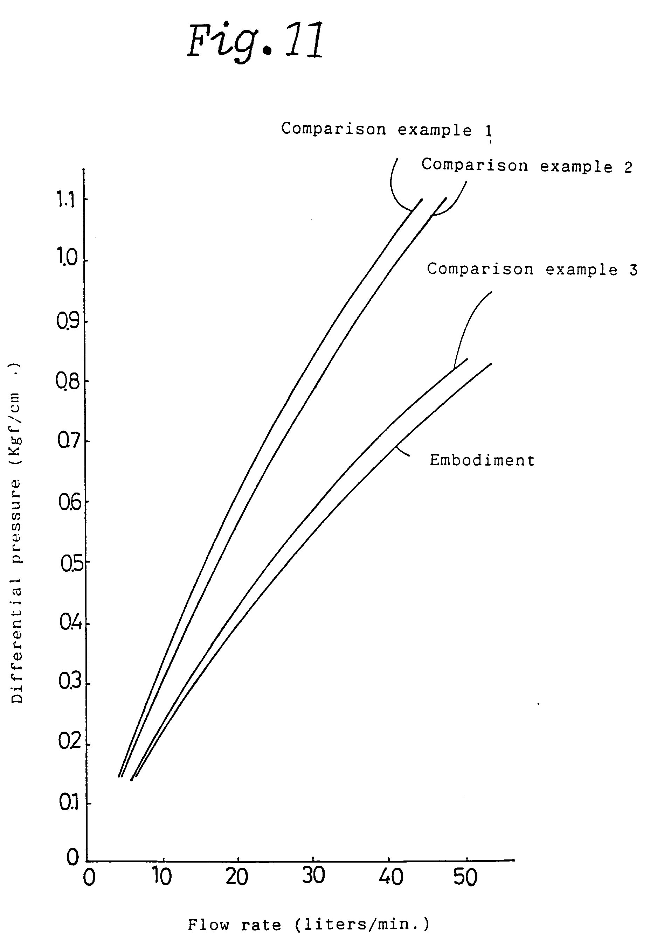

A measurement result of flow rate characteristics of the embodiment and comparison examples is shown in Fig. 11 (a relation of flow rate to differential pressure was measured by using $N_2$ gas in the condition that the secondary side open to the atmosphere).

It is recognized that comparison example 3 is relatively low in pressure loss, while comparison examples 1 and 2 are high in pressure loss, and the embodiment is lower in pressure loss than any of the comparison examples, thus being a high precision filter with a low pressure loss. With regard to filtering area of the embodiment and comparison examples, when the embodiment is supposed to be 1, comparison examples 1 and 2 are 1.5, and comparison example is about 2, hence the embodiment is the smallest.

[Test 2]

Particle capturing performance:

The particle capturing performance was measured by using an aerosol with fine DOP (dioctyl phthalate) particles.

Measurement conditions

| | |
|---|---|
| Aerosol : | Multidispersion DOP particles |
| | Distribution of diameter 0.02 to 0.3 $\mu$m |
| | (presumed) |
| Flow rate: | 15 liters/minute |
| Particle concentration: | $2.8 \times 10^5$/cc |
| Measurement time: | The number of outflow particles in 30 minutes measured in 10 sec unit Total flow rate at 15 |
| | x 30 = 450 liters |
| Counting of particles: | Concentrated nuclear counter ... 5 cc per second (9 liter in total) |
| Shape of filter: | Every sample was built in a housing having a joint in measurement. |
| Pretreatment of filter: | Backwashed by clean IPA (isopropyl alcohol), then dried. |

The number of outflow particles during the flow of 9 liters are as follows;

| Embodiment | 0 |
|---|---|
| Comparison example 1 | 39 |
| Comparison example 2 | 29 |
| Comparison example 3 | 11 |

It is known that the embodiment is quite preferable with the number of outflow particles being few.

[Test 3]

Ventilation resistance and bubble point pressure:

A result of ventilation resistance and bubble point pressure measured by changing thickness of the embodiment was as follows (the ventilation resistance is a differential pressure at 1 liter/minute of flow rate).

| Thickness of particle layer (mm) | 0.325 | 0.5 | 0.575 | 0.65 | 0.75 |
|---|---|---|---|---|---|
| Ventilation resistance/9,81 Pa [(mmAq)] | 116 | 173 | 200 | 219 | 243 |
| Initial Bubble point pressure/9,81 Pa [(mmAq)] | 3786 | 3830 | 3864 | 3854 | 3751 |
| Point-of-intersection Bubble point pressure/9,81 Pa [(mmAq)] | 4418 | 4540 | 4589 | 4589 | 4629 |

Here, the bubble point pressure is specified in "Filterable Particle Size Test", JIS B8536, and measured by using isopropyl alcohol. The initial bubble point pressure means a pressure when a bubble is generated for the first time. The point-of-intersection bubble point pressure is calculated from a graph showing a relation of pressure to flow rate, and means a pressure at a point at which a curve in the graph with larger rate of variation intersects a curve with smaller rate of variation. Therefore, a value of (Point-of-intersection Bubble point pressure (9,81 Pa) [(mmAq)] / Initial Bubble point pressure (9,81 Pa) [(mmAq)] closer to 1 means a dispersion of the pore diameter is smaller, thereby a superior filter member.

In the embodiments, the bubble point values show stable values within each conditions, and the rise due to an increase in thickness is not very significant. A point-of-intersection value of about 44145 Pa (4500 mmAq) is a very high value, and means that a filter with low pressure loss and high precision conventionally unavailable is obtained.

[Test 4]

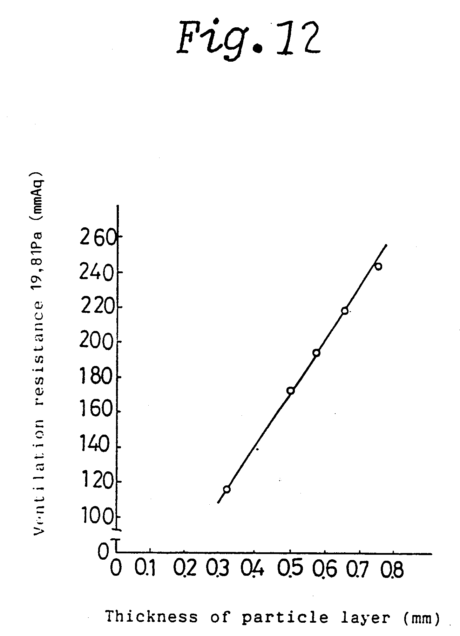

A result of correlation measured between thickness and ventilation resistance of the embodiment by changing the thickness is shown in Fig. 12.

As in the figure, the thickness and ventilation resistance have a linear relationship, which is shown by the following equation.

$$\Delta P = 307\, t$$

$\Delta P$ :  Ventilation resistance (9,81 Pa) [(mmAq)]

t :  Thickness of fibrous layer (mm)

Such clear linear relation between the thickness and ventilation resistance shows that the distribution density is constant even when the thickness varies, because of a very homogeneous structure of the particle layer, and the variation in thickness is small over the entire filter surface.

Therefore, since the thickness of fibrous layer is optionally adjustable by setting a suction time, and a ventilation resistance according to the thickness can be obtained, it can be said that the characteristics are confirmed by controlling the thickness.

## Claims

1. A laminated filter material comprising a sintered porous metal support member having asperities on at least one surface thereof, and a particle layer of metal particles being finer than the average pore diameter of the support member and comprising metal short fibers having a diameter of 0.5 to 15 µm and an aspect ratio of 2 to 15,
   wherein said particle layer is laminated in almost uniform thickness on said asperate surface of said sintered porous metal support member by immersing said sintered porous metal support member in a suspension of said metal particles without a binder, evacuating said suspension through said sintered porous metal support member, and integrally fixing said metal particles to said sintered porous metal support member by sintering, to thereby obtain said particle layer and a boundary between said particle layer and said sintered porous metal support member that is aligned along said asperate surface of said sintered porous metal support member.

2. A laminated filter material according to claim 1, wherein said support member comprises a sintered body molded from either metal powders, metal fibers or metal filaments without using any binder.

3. A laminated filter material according to claim 1, wherein said supporting member is molded by using amorphous metal powders having an average diameter of 20 to 100 times of the particles so as to form asperities on said one surface by the outer surface shape of the metal powders.

4. A laminated filter material according to claim 1, wherein said particle layer is 50 to 80% in porosity.

5. A laminated filter material according to claim 1, wherein said metal short fibers are stainless steel,

6. A laminated filter material according to claim 1, wherein said particle layer has a thickness of 0.3 to 0.5 mm.

7. A laminated filter material according to claim 1, wherein said particle layer has a thickness of 1/20 to 1/4 a thickness of the laminated filter material.

8. A filter comprising a laminated filter material according to claim 1 and a housing supporting said laminated filter material, wherein said laminated filter material has an end face and said housing comprises a metal attachment part having a surface contacting said end face of said laminated filter material, said end face being fixed to said metal attachment part by fusing said laminated filter material from the reverse side of the surface in contact with said metal attachment part.

9. A filter according to claim 8, wherein said housing has a container body for containing the laminated filter material which comprises a plural split parts.

10. A filter according to claim 8, wherein the fusion depth of the fused part is smaller than the fusion width.

11. A method for fabricating a laminated filter material comprising the steps of obtaining a sintered porous metal support member having asperities on at least one surface thereof; preparing a suspension of metal particles being finer than the average pore diameter of support member and comprising metal short fibers having a diameter of 0.5 to 15µm and an aspect ratio of 2 to 15, scattered in said suspension without using a binder; obtaining a raw laminated body of said sintered porous metal support member and a particle layer laminated on said asperate surface of said sintered porous metal support member in almost uniform thickness, and having a boundary surface between said particle layer and said asperities by immersing said sintered porous metal support member in said suspension and evacuating said suspension from the reverse side of said asperate surface; removing said raw laminated body from said suspension; and sintering said raw laminated body to obtain said laminated filter material.

**12.** A method for fabricating a laminated filter material according to claim 11, wherein a step of drying the raw laminated body is provided between the step of said taking the raw laminated body from the suspension and the step of said sintering the raw laminated body.

**Patentansprüche**

**1.** Laminiertes Filtermaterial, das umfaßt: einen gesinterten porösen Metallträgerbestandteil, der auf mindestens einer seiner Oberflächen Unebenheiten aufweist, und eine Partikelschicht von Metallpartikeln, die feiner als der durchschnittliche Porendurchmesser des Trägerbestandteils sind, und die Metallkurzfasern umfassen, mit einem Durchmesser von 0,5 bis 15 µm und einem Seitenverhältnis von 2 bis 15 aufweist, worin die genannte Partikelschicht in annähernd gleichförmiger Dicke auf der genannten unebenen Oberfläche des genannten gesinterten porösen Metallträgerbestandteils laminiert wird, durch Eintauchen des genannten gesinterten porösen Metallträgerbestandteils in eine Suspension der genannten Metallpartikel ohne ein Bindemittel, Evakuieren der genannten Suspension durch den genannten gesinterten porösen Metallträgerbestandteil und selbsttragendes Fixieren der genannten Metallpartikel an den genannten porösen Metallträgerbestandteil durch Sintern, um dadurch die genannte Partikelschicht und eine Grenzfläche zwischen der genannten Partikelschicht und dem genannten gesinterten porösen Metallträgerbestandteil zu erhalten, die entlang der genannten unebenen Oberfläche des genannten gesinterten porösen Metallträgerbestandteils ausgerichtet ist.

**2.** Laminiertes Filtermaterial nach Anspruch 1, worin der genannte Trägerbestandteil einen gesinterten Körper umfaßt, der entweder aus Metallpulvern, Metallfasern oder Metallfilamenten ohne Verwendung irgendeines Bindemittels geformt ist.

**3.** Laminiertes Filtermaterial nach Anspruch 1, worin der genannte Trägerbestandteil unter Verwendung amorpher Metallpulver mit einem durchschnittlichen Durchmessers, der dem 20-bis 100-fachen der Partikel entspricht, geformt wird, um Unebenheiten auf der genannten einen Oberfläche durch die äußere Oberflächenform der Metallpulver zu bilden.

**4.** Laminiertes Filtermaterial nach Anspruch 1, worin die genannte Partikelschicht eine Porosität von 15 bis 80 % aufweist.

**5.** Laminiertes Filtermaterial nach Anspruch 1, worin die genannten Metallkurzfasern aus rostfreiem Stahl sind.

**6.** Laminiertes Filtermaterial nach Anspruch 1, worin die genannte Partikelschicht eine Dicke von 0,3 bis 0,5 mm aufweist.

**7.** Laminiertes Filtermaterial nach Anspruch 1, worin die genannte Partikelschicht eine Dicke von 1/20 bis 1/4 der Dicke des laminierten Filtermaterials aufweist.

**8.** Filter, der ein laminiertes Filtermaterial nach Anspruch 1 und ein Gehäuse umfaßt, das das genannte laminierte Filtermaterial trägt, worin das genannte laminierte Filtermaterial eine Endfläche besitzt und das genannte Gehäuse einen Metallverbindungsteil mit einer Oberfläche umfaßt, die in Kontakt mit der genannten Endfläche des genannten laminierten Filtermaterials steht, wobei die genannte Endfläche an den genannten Metallverbindungsteil durch Schmelzen des genannten laminierten Filtermaterials von der Rückseite der Oberfläche fixiert wird, die in Kontakt mit dem genannten Metallverbindungsteil steht.

**9.** Filter nach Anspruch 8, worin das Gehäuse einen Behälterkörper zur Aufnahme des laminierten Filtermaterials besitzt, der mehrere Teilstücke umfaßt.

**10.** Filter nach Anspruch 8, worin die Schmelztiefe des geschmolzenen Teils geringer ist als die Schmelzbreite.

11. Verfahren zur Herstellung eines laminierten Filtermaterials, das die Schritte umfaßt: Bereitstellen eines gesinterten porösen Metallträgerbestandteils mit Unebenheiten auf mindestens einer Oberfläche davon; Herstellen einer Suspension von Metallpartikeln, die feiner als der durchschnittliche Porendurchmesser des Trägerbestandteils sind, und die Metallkurzfasern mit einem Durchmesser von 0,5 bis 15 µm und einem Seitenverhältnis von 2 bis 15 umfassen, die in der genannten Suspension ohne Verwendung eines Bindemittels verteilt sind; Erhalt eines laminierten Rohkörpers des genannten gesinterten porösen Metallträgerbestandteils und einer Partikelschicht, die auf die genannte unebene Oberfläche des genannten gesinterten porösen Metallträgerbestandteils in annähernd gleichförmiger Dicke laminiert ist, und die eine Grenzfläche zwischen der genannten Partikelschicht und den genannten Unebenheiten besitzt, durch Eintauchen des genannten gesinterten porösen Metallträgerbestandteils in die Suspension und Evakuieren der genannten Suspension von der Rückseite der genannten unebenen Oberfläche; Entfernung des genannten laminierten Rohkörpers aus der Suspension; und Sintern des genannten laminierten Rohkörpers, um das genannte laminierte Filtermaterial zu erhalten.

12. Verfahren zur Herstellung eines laminierten Filtermaterials nach Anspruch 11, worin ein Schritt des Trocknens des laminierten Rohkörpers durchgeführt wird zwischen dem Schritt der Entnahme des laminierten Rohkörpers aus der Suspension und dem Schritt des Sinterns des laminierten Rohkörpers.

**Revendications**

1. Un matériau filtrant stratifié comportant un élément support en métal poreux fritté, qui présente des aspérités sur au moins une de ses faces, et une couche de particules métalliques qui sont plus fines que le diamètre moyen des pores de l'élément support, et comportant de courtes fibres métalliques ayant un diamètre de 0,5 à 15 µm et un rapport de forme de 2 à 15, dans lequel ladite couche de particules est stratifiée selon une épaisseur pratiquement uniforme sur ladite face présentant des aspérités dudit élément support en métal poreux fritté en immergeant ledit élément support en métal poreux fritté dans une suspension desdites particules métalliques sans agent liant, en transférant sous vide ladite suspension à travers ledit élément support en métal poreux fritté, et en fixant solidement lesdites particules métalliques audit élément support en métal poreux fritté par frittage, de façon à obtenir ladite couche de particules et une zone limite entre ladite zone de particules et ledit élément support en métal poreux fritté, qui est aligné le long de la surface présentant des aspérités dudit élément support en métal poreux fritté.

2. Un matériau filtrant stratifié selon la revendication 1, dans lequel ledit élément support comporte un élément fritté, moulé à partir de poudres métalliques, de fibres métalliques ou de filaments métalliques sans utiliser d'agent liant.

3. Un matériau filtrant stratifié selon la revendication 1, dans lequel ledit élément support est moulé en utilisant des poudres métalliques amorphes qui présentent un diamètre moyen de 20 à 100 fois celui des particules de façon à former des aspérités sur une surface grâce à la forme superficielle externe des poudres métalliques.

4. Un matériau filtrant stratifié selon la revendication 1, dans lequel ladite couche de particules présente une porosité de 50 à 80%.

5. Un matériau filtrant stratifié selon la revendication 1, dans lequel lesdites courtes fibres métalliques sont en acier inoxydable.

6. Un matériau filtrant stratifié selon la revendication 1, dans lequel ladite couche de particules présente une épaisseur de 0,3 à 0,5 mm.

7. Un matériau filtrant stratifié selon la revendication 1, dans lequel ladite couche de particules présente une épaisseur de 1/20 à 1/4 de l'épaisseur du matériau filtrant stratifié.

8. Un filtre comportant un matériau filtrant stratifié selon la revendication 1, et un boîtier supportant ledit matériau filtrant stratifié, dans lequel ledit matériau filtrant stratifié présente une face d'extrémité et ledit boîtier comporte une partie de fixation en métal, qui présente une surface en contact avec ladite extrémité dudit matériau filtrant stratifié, cette face d'extrémité étant fixée à ladite partie de fixation métallique par fusion dudit matériau filtrant stratifié à partir de la face opposée de la surface en contact avec ladite partie de fixation en métal.

9. Un filtre selon la revendication 8, dans lequel ledit boîtier présente un élément de type conteneur pour renfermer le matériau filtrant stratifié, qui comporte plusieurs parties individuelles.

**10.** Un filtre selon la revendication 8, dans lequel la profondeur de fusion de la partie fondue est plus faible que la largeur de fusion.

**11.** Un procédé pour fabriquer un matériau filtrant stratifié, comportant les étapes de réaliser un élément support en métal poreux fritté ayant des aspérités sur au moins une de ses faces, à préparer une suspension de particules métalliques qui sont plus fines que le diamètre moyen des pores de l'élément support et comportant de courtes fibres métalliques, qui présentent un diamètre de 0,5 à 15 $\mu$m et un rapport de forme de 2 à 15, dispersées dans ladite suspension sans utiliser d'agent liant; obtenir un élément stratifié brut dudit élément support en métal poreux fritté et une couche de particules stratifiée sur ladite surface présentant des aspérités dudit élément support en métal poreux fritté selon une épaisseur pratiquement uniforme, et ayant une surface limite entre ladite couche de particules et lesdites aspérités par immersion dudit élément support en métal poreux fritté dans ladite suspension et en transférant sous vide ladite suspension à partir de la face inverse de ladite surface présentant des aspérités, à prélever ledit corps stratifié brut de ladite suspension; et à fritter ledit corps laminé brut afin d'obtenir ledit matériau filtrant stratifié.

**12.** Un procédé pour fabriquer un matériau filtrant stratifié selon la revendication 11, dans lequel est prévue une étape de séchage de l'élément brut stratifié entre l'étape où l'on prélève le corps stratifié brut de la suspension et l'étape où l'on fritte l'élément stratifié brut.

*Fig.1*

*Fig.2*

Fig.3

# Fig.4

# Fig.5

# Fig.6

# Fig. 7

# Fig. 8

Support member: 140/200 mesh
0.105/0.074 mm

Support member: 200/250 mesh
0.074/0.064 mm

Thickness of particle layer (mm)

Suction time (sec.)

# Fig. 9

# Fig.10

# Fig. 11

Comparison example 1

Comparison example 2

Comparison example 3

Embodiment

Differential pressure (Kgf/cm²)

1.1
1.0
0.9
0.8
0.7
0.6
0.5
0.4
0.3
0.2
0.1
0

0    10    20    30    40    50

Flow rate (liters/min.)

# Fig. 12

Thickness of particle layer (mm)